# NEUE EUROPÄISCHE PATENTSCHRIFT

(11) **EP 2 516 296 B2**
(45) Veröffentlichungstag und Bekanntmachung des Hinweises auf die Entscheidung über den Einspruch: **21.02.2018**
(45) Hinweis auf die Patenterteilung: 13.08.2014
(21) Anmeldenummer: 11770342.1
(22) Anmeldetag: 20.09.2011
(51) Int. Cl.: B65D 85/804

(54) **PORTIONSKAPSEL UND VERFAHREN ZUR HERSTELLUNG EINES GETRÄNKS MIT EINER PORTIONSKAPSEL**
PORTION CAPSULE, AND METHOD FOR PRODUCING A BEVERAGE USING A PORTION CAPSULE
DOSETTE SOUS FORME DE CAPSULE ET PROCEDE DE PREPARATION D'UNE BOISSON A L'AIDE D'UNE DOSETTE

(30) Priorität: 09.03.2011 US 201113044217; 02.03.2011 DE 102011012881; 07.02.2011 DE 102011010589; 22.09.2010 DE 202010013500 U
(43) Veröffentlichungstag der Anmeldung: 31.10.2012
(60) Teilanmeldung: 14178389.4
(73) Patentinhaber: K-fee System GmbH, 51469 Bergisch Gladbach (DE)
(72) Erfinder: MAHLICH, Gotthard, 61476 Kronberg (DE)
(74) Vertreter: Wolff, Felix
(86) Internationale Anmeldenummer: PCT/EP2011/004703
(87) Internationale Veröffentlichungsnummer: WO 2012/038063

(56) Entgegenhaltungen:
- EP-A1- 0 512 468
- EP-A1- 0 521 510
- EP-A1- 1 774 878
- EP-A1- 1 997 748
- WO-A1-00/56629
- WO-A1-03/073896
- WO-A2-2005/066040
- US-A- 5 496 573
- US-A1- 2003 217 643

## Beschreibung

### Stand der Technik

Die vorliegende Erfindung betrifft eine Portionskapsel zur Herstellung eines Getränks, aufweisend einen Kapselkörper mit einem Kapselboden und einer Einfüllseite, wobei zwischen dem Kapselboden und der Einfüllseite ein Hohlraum zur Aufnahme eines pulverförmigen oder flüssigen Getränkesubstrats ausgebildet ist und wobei zwischen dem Getränkesubstrat und dem Kapselboden ein Filterelement angeordnet ist.

Solche Portionskapseln sind aus dem Stand der Technik allgemein bekannt. Beispielsweise sind in den Druckschiften EP 1792850 B1, EP 1344722 A1, EP 1997748, WO 03/07896, EP 052510 und US 2003/0172813 A1, sowie US 5,472,719 gattungsgemäße Portionskapseln zur Kaffee- und Espressozubereitung offenbart.

Derartige Portionskapseln zur Herstellung eines Getränkes sind bevorzugt kegelstumpfförmig oder zylindrisch geformt und werden beispielsweise aus einer tiefgezogenen Kunststofffolie oder im Kunststoffspritzverfahren hergestellt. Sie haben üblicherweise eine offene Einfüllseite mit einem Kragenrand, auf den eine Deckelfolie aufgesiegelt oder aufgeklebt wird, einen geschlossenen Kapselboden, wobei zwischen dem Getränkesubstrat und dem Kapselboden ein sich gegen den Kapselboden abstützendes Partikelsieb angeordnet ist. Diese Siebe sind entweder aus einem thermoplastischen Kunststoff gespritzt oder aus einer Kunstofffolie tiefgezogen oder geprägt.

Für die Zubereitung eines Kaffeegetränkes wird die Portionskapsel in eine Brühkammer eines Zubereitungsgerätes eingebracht. Nach oder während des Schließvorganges der Brühkammer wird die Kapsel bevorzugt auf ihrer geschlossenen Bodenseite mittels eines in der Brühkammer angeordneten Öffnungsdornes geöffnet und nach dem Abdichten der Brühkammer wird die mit einer Verschlussfolie verschlossene Einfüllseite der Portionskapsel mittels Einstechmitteln angestochen. Anschließend wird Zubereitungsflüssigkeit, vorzugsweise heißes Wasser, unter Druck in die Portionskapsel gefördert. Die Zubereitungsflüssigkeit durchströmt das Getränkesubstrat und extrahiert und/oder löst die für die Getränkeherstellung benötigten Stoffe aus dem Getränkesubstrat aus. Für die Zubereitung eines Espresso wirkt zum Extrahieren der ätherischen Öle beispielsweise ein Brühwasserdruck von bis zu 20 bar auf das Kaffepulver. Dieser Druck wirkt ferner auch auf das zwischen dem Kaffeepulver und dem Kapselboden und vor dem eingestochenen Kapselauslauf liegende Partikelsieb ein.

Nachteilig an den im Kunststoffspritzverfahren oder im Tiefzieh- oder Prägeverfahren hergestellten Sieben ist jedoch, dass für die Rückhaltung der Kaffeepartikel die Öffnung der Sieblöcher kleiner als die kleinsten Kaffeepartikel sein müssen. Da im Kaffeemahlverfahren zwangsläufig auch ein gewisser Staubanteil anfällt, ergibt sich bei zu großen Sieblöchern ein Kaffeepartikeldurchgang oder bei zu kleinen Sieblöchern, insbesondere bei hohen Drücken, ein Verstopfen der Siebe. Ferner sind unter den Sieben entsprechende, gegen den Kapselboden wirkende Abstützelemente erforderlich, um die Brühwasserdrücke von bis zu 20 bar aufzunehmen und eine Verformung der Siebe in Folge des hohen Brühwasserdrucks (zusammen mit einer hohen Brühwassertemperatur) zu verhindern. In nachteiliger Weise, erfordern diese Abstützelement insbesondere bei im Spritzgussverfahren hergestellten Siebanordnungen einen zusätzlichen Materialeinsatz, wodurch die Herstellungskosten steigen.

Im Stand der Technik sind deshalb Portionskapseln mit Siebanordnungen bekannt, die diese Nachteile vermeiden sollen. In der US 2778739, der EP 1710173 A1 und der US 5352765 sind Portionskapseln mit Siebanordnungen offenbart, die aus einem Siebträger mit relativ großen Durchgangsöffnungen bestehen, wobei diese Öffnungen mit einem Filtermaterial abgedeckt sind. Nachteil dieser Anordnungen ist, dass zur Darstellung derartiger Siebanordnungen Zusatzkosten für Material und die Fertigung entstehen, da sie aus einem stabilen Siebträger und dem auf dem Siebträger angeordneten Filtermaterial bestehen.

Sowohl bei Sieben mit Sieblöchern als auch bei Siebanordnungen mit einem zusätzlichen Filtermaterial muss sichergestellt werden, dass das durch die Siebanordnung tretende fertige Getränk zu einer Kapselausflussöffnung fließen kann, d.h. zwischen dem Kapselboden und der Siebanordnung muss ein Freiraum für den Getränkeablauf vorgesehen werden. Außerdem beanspruchen derartige Siebanordnungen einen eigenen Raumanteil in der Portionskapsel, was zu einer Vergrößerung des Kapselvolumens und damit zwangsläufig ebenfalls zu einem zusätzlichen Materialeinsatz führt.

Es war deshalb die Aufgabe der vorliegenden Erfindung, eine Portionskapsel mit einer Filteranordnung zur Verfügung zu stellen, welche im Vergleich zum Stand der Technik kostengünstiger zu fertigen ist und bei welcher gleichzeitig die im Zusammenhang mit dem Stand der Technik aufgezeigten Nachteile vermieden werden.

Gelöst wird diese Aufgabe mit einer Portionskapsel zur Herstellung eines Getränks, gemäss Anspruch 1.

Im Vergleich zum Stand der Technik hat die erfindungsgemäße Portionskapsel den Vorteil, dass ein einfaches und kostengünstiges Filtervlies als Filtersieb Verwendung findet. Ein aufwändiger Kunststoffspritzvorgang oder ein Tiefzieh- bzw. Prägeverfahren zur Herstellung der Siebe ist somit einsparbar. Die Herstellungskosten werden somit erheblich gesenkt. Zudem wird keine Stützstruktur benötigt, da sich das Vlies unmittelbar am Kapselboden abstützt. Im Vergleich zu den aus dem Stand der Technik bekannten Kunststofffiltern hat ein Filtervlies zudem den Vorteil, dass es eine deutlich größere Flüssigkeitseintrittsoberfläche aufweist. Ferner wird ein Flüssigkeitsquerfluss (parallel zur Haupterstreckungsebene der Filterebene) ermöglicht, wodurch ein besseres Durchmisch- und Abfließverhalten erzielt wird. Darüber hinaus hat sich gezeigt, dass sich bei der Verwendung eines Filtervlieses die Gefahr von Siebverstopfungen deutlich reduziert bzw. nahezu ausgeräumt ist. Überraschenderweise zeigt sich das Filtervlies sowohl bei einer Getränkezubereitung mit einer unter vergleichsweise niedrigen Druck stehenden Zubereitungsflüssigkeit, als auch bei einer Getränkezubereitung mit einer unter vergleichsweise hohen Druck stehenden Zubereitungsflüssigkeit als verstopfungsresistent. Ferner wird zuverlässig stets einen Flüssigkeitsquerfluss im Filtervlies aufrechterhalten und ein Abfluss der in das Filtervlies eintretenden Flüssigkeiten zu einer Abflussöffnung gewährleistet. Trotzdem bildet sich eine sogenannte "Crema", d.h. Schaum, auf dem Getränk, insbesondere dem Espresso, aus. Die Portionskapsel im Sinne der vorliegenden Erfindung umfasst eine vorzugsweise hermetisch dichte Portionskapsel. Dies bedeutet, dass das in der Portionskapsel befindliche Getränke- oder Lebensmittelpulver, beispielsweise Kaffeepulver, Suppenpulver oder Tee, vor dem Extraktionsvorgang im Wesentlichen aromadicht gegenüber der Umwelt verschlossen ist. Die Portionskapsel muss aber nicht hermetisch dicht sein, sondern kann auch, vor deren Verwendung in einer hermetisch dichten Verpackung vorgesehen sein, die dann, beispielsweise manuell geöffnet wird.

Ein Vlies im Sinne der Erfindung ist eine ungeordnete, nicht gewebte Struktur aus Fasern, insbesondere Kunststofffasern. Ein Vlies im Sinne der Erfindung beinhaltet vorzugsweise kein Papier oder Papier-ähnliche Stoffe.

Gemäß der vorliegenden Erfindung ist vorgesehen, dass das Vlies einen aus Kunststoff-Feinfasern, beispielsweise Polyester-Feinfasern, hergestellten Vliesstoff umfasst, welcher insbesondere ein Wirrfaser- und/oder faserorientierter-Vliesstoff ist. Das Vlies umfasst bevorzugt eine Massenbelegung (auch als Grammatur oder Flächengewicht bezeichnet) zwischen 40 und 100 Gramm pro Quadratmeter, besonders bevorzugt zwischen 60 und 80 Gramm pro Quadratmeter, und ganz besonders bevorzugt, von im Wesentlichen 70 Gramm pro Quadratmeter. Das Filterelement bzw. das Vlies weist bevorzugt eine Dicke zwischen 0,2 und 0,8 Millimetern, besonders bevorzugt zwischen 0,3 und 0,35 Millimetern, und ganz besonders bevorzugt, von im Wesentlichen 0,32 Millimetern auf. Das Vlies ist erfindungsgemäss derart ausgebildet, dass die Luftdurchlässigkeit des Vlieses bei 100 Pascal zwischen 1000 und 3000 l/(m²s), bevorzugt zwischen 1500 und 2500 (l/m²s) und besonders bevorzugt, im Wesentlichen bei 2000 l/(m²s) liegt. Es hat sich in überraschender und nicht vorhersehbarer Weise gezeigt, dass mit derartigen Vliesstoffen optimale Ergebnisse hinsichtlich Extraktionseffizienz, Durchmisch- und Abfließverhalten, sowie Verstopfungsresistenz zu erzielen sind und sich trotzdem die "Crema" bildet.

Vorzugsweise wird das Vlies so auf dem Boden der Kapsel angeordnet dass es möglichst großflächig anliegt. Besonders bevorzugt wird das Vlies an den Boden gesiegelt, insbesondere durch Ultraschall. Weiterhin bevorzugt wird das Vlies vor dessen Befestigung an der Kapsel, insbesondere dem Kapselboden, gespannt, um die Anlage an den Boden zu verbessern.

Beim Öffnen der Kapsel durch ein Perforationsmittel ist es vorteilhaft, wenn dieses das Vlies von dem Kapselboden wegbewegt und dabei spannt oder zusätzlich spannt. Dabei muss das Perforationsmittel das Vlies durchdringen. Vorzugsweise ist das Vlies größer bemessen als der Kapselboden, auf dem es aufliegt, so dass das Vlies etwas am Rand hochsteht.

Gemäß einem weiteren Gegenstand oder einer weiteren Ausführungsform der vorliegenden Erfindung weist das Filterelement eine Filzstruktur auf. Insbesondere handelt es sich dabei um eine Nadelfilzstruktur. Vorzugsweise besteht das Filterelement aus mindestens einer Filzstruktur und einer Trägerstruktur, insbesondere einer Gewebestruktur, wobei, besonders bevorzugt die Filzstruktur, zumindest einen Teilabschnitt des Volumens, die Trägerstruktur umfasst. Vorzugsweise erstreckt sich die Filzstruktur über der gesamten Querschnitt der Trägerstruktur, besonders bevorzugt aber nur über nur über einen Teilbereich der Höhe. Vorzugsweise ist die Filzstruktur form- kraft und/oder stoffschlüssig mit der Trägerstruktur verbunden. Vorzugsweise weist das Filterelement zwei oder mehr Filzstrukturen auf, die durch die Trägerstruktur vorzugsweise voneinander getrennt sind. Die Dicke der beiden Filzstrukturen kann gleich oder unterschiedlich sein. Vorzugsweise ist eine dem Pulver oder Tee zugewandte Filzstruktur dünner als die dem Kapselboden zugewandte Filzstruktur oder umgekehrt. Vorzugsweise wird die Oberfläche der Filzstruktur behandelt, beispielsweise wärmebehandelt, um beispielsweise lose Fasern zu fixieren. Das Filterelement muss mit der Kapsel und deren Boden, insbesondere stoffschlüssig, verbunden werden. Beim Perforieren muss das Perforationsmittel in dieses Filterelement eindringen. Vorzugsweise werden mehrere Filterelemente, die eine oder mehrere Filzstrukturen und eine Trägerstruktur aufweisen, in der Kapsel übereinander angeordnet, ggf. miteinander verbunden.

Ein Filterelement mit einer Filzstruktur hat den Vorteil, dass sich keine "Crema" auf einem Kaffee, Espresso oder dergleichen bildet bzw. dass sich auf einem Tee keine Blasen bilden.

Ein eine Trägerstruktur, insbesondere eine Gewebestruktur, und eine Filzstruktur aufweisendes Filterelement wird beispielsweise dadurch hergestellt, dass eine Gewebestruktur bestehend aus Längs- und Querfäden zur Verfügung gestellt wird. Für die Konstruktion eines Filzes, insbesondere eines Nadelfilzes, werden vorzugsweise Fasereinheiten ausgewählt von 0.8 - 7 dtex. Die Verbindung der Einzelfasern miteinander zu einem Filz und/oder dessen Verankerung in der Trägerstruktur findet vorzugsweise durch den Produktionsprozess des Vernadelns statt. Dabei werden Nadeln mit umgekehrten Widerhaken in das vorgelegte Faserpaket mit hoher Geschwindigkeit eingestochen und wieder herausgezogen. Durch die Widerhaken werden die Fasern über eine Vielzahl entstehender Schlaufen miteinander und/oder mit dem Trägergewebe verschlungen.

Das Trägerelement aufweisend eine oder mehrere Filzstrukturen umfasst bevorzugt eine Massenbelegung (auch als Grammatur oder Flächengewicht bezeichnet) zwischen 100 und 800 Gramm pro Quadratmeter, besonders bevorzugt zwischen 200 und 650 Gramm pro Quadratmeter, und ganz besonders bevorzugt, von im Wesentlichen 150 - 250 Gramm pro Quadratmeter für die Herstellung von Tee und 600 - 700 Gramm pro Quadratmeter für die Herstellung von Kaffee, Espresso oder dergleichen. Das Filterelement bzw. das Vlies weist bevorzugt eine Dicke zwischen 0,8 und 3,3 Millimetern, besonders bevorzugt zwischen 1,1 und 3,0 Millimetern, und ganz besonders bevorzugt, 1,2 - 1,4 Millimeter für die Herstellung von Tee und 2,6 - 3,0 für die Herstellung von Kaffee auf.

Das Filterelement, nämlich das Vlies, wird in den Kapselkörper eingelegt und wird mit dem Kapselboden oder mit dem Kapselboden und der Seitenwand der Kapsel, insbesondere durch Schweißen, beispielsweise mit Ultraschall, verbunden, bevor das Getränkesubstrat in den Kapselkörper eingefüllt wird. Der Kapselkörper ist bevorzugt kegelstumpfförmig oder zylindrisch geformt und wird beispielsweise aus Kunststoff, einem Naturstoff und/oder einem biologisch abbaubaren Werkstoff aus einer tiefgezogenen Kunststofffolie oder im Kunststoffspritzverfahren hergestellt. Der Kapselkörper weist vorzugsweise auf der Einfüllseite einen Kragenrand auf, auf den eine Deckelfolie aufgesiegelt oder aufgeklebt ist. Alternativ ist denkbar, dass der Kapselkörper und ein Kapseldeckel mittels eines mechanischen Verfahrens miteinander verbunden sind. Der Boden der Portionskapsel ist erfindungsgemäss geschlossen und wird erst in der Brühkammer mittels eines von außen auf den Portionskapselboden wirkenden Perforationsmittels zur Erzeugung einer Auslauföffnung perforiert.

Die Auslauföffnung ist vorzugsweise so groß vorgesehen, dass sie ein gegebenenfalls vorhandenes Perforationsmittel berührungsfrei aufnehmen kann. Besonders bevorzugt ist die Auslauföffnung so groß vorgesehen, das an ihr, beim Ausströmen des fertiggestellten Getränkes kein nennenswertes Druckverlust entsteht, insbesondere dass es zu keiner nennenswerten Verwirbelung des fertiggestellten Getränkes kommt, der zu einem Gaseintrag in das Getränk und damit zur Schaumbildung führen könnte.

Erfindungsgemäss ist vorgesehen, dass das Filterelement von dem Perforationsmittel durchstochen wird.

Gemäß eines weiteren Gegenstands oder einer weiteren Ausführungsform der vorliegenden Erfindung ist vorgesehen, dass das Filterelement im Hohlraum der Portionskapsel angeordnet ist und auf einer der Einfüllseite zugewandten Seite des Kapselbodens aufliegt.

Gemäß einer weiteren Ausführungsform der vorliegenden Erfindung ist vorgesehen, dass der Randbereich sich zumindest teilweise entlang eines Seitenwandbereichs des Kapselkörpers erstreckt, wobei sich der Seitenwandbereich zwischen der Einfüllseite und dem Kapselboden erstreckt. In vorteilhafter Weise wird der Randbereich beim Befüllen der Portionskapsel durch die Getränkesubtanz nach Außen gegen den Seitenwandbereich gedrückt, wodurch eine verbesserte Dichtwirkung zwischen dem Seitenwandbereich und dem Filterelement erzielt wird.

Gemäß einer weiteren Ausführungsform der vorliegenden Erfindung ist vorgesehen, dass das Filterelement den Kapselboden vollständig oder nur teilweise überdeckt. Insbesondere ist es ausreichend, wenn das Filterelement ausschließlich im Bereich der Perforierung bzw. im Bereich einer Auslassöffnung im Kapselboden angeordnet ist.

Gemäß einer weiteren Ausführungsform der vorliegenden Erfindung ist vorgesehen, dass das Filterelement am Kapselboden befestigt ist, wobei das Filterelement vorzugsweise stoffschlüssig am Kapselboden, insbesondere durch Siegeln befestigt ist. Vorteilhafterweise wird somit ein Verrutschen des Filterelements verhindert. Diese Befestigung erfolgt vorzugsweise durch Ultraschallschweißen.

Erfindungsgemäss ist vorgesehen, dass das Filterelement in einem Randbereich des Kapselbodens am Kapselboden befestigt ist. Vorteilhafterweise wird somit ein Verrutschen des Filterelements verhindert und die Dichtwirkung zwischen Kapselkörper und Filterelement vergrößert, wobei aber gleichzeitig ein Anheben des Filterelements in seinem Zentralbereich weiterhin ermöglicht wird. Das Filterelement ist dabei vorzugsweise elastisch ausgebildet.
Erfindungsgemäss ist vorgesehen, dass das Filterelement derart ausgebildet ist, dass bei einer Perforation des Kapselbodens durch ein äußeres Perforationsmittel zumindest teilweise ein Abheben des Filterelements vom Kapselboden erfolgt.

Erfindungsgemäss ist vorgesehen, dass das Filterelement sich nur in einem Zentralbereich vom Kapselboden abhebt und im Randbereich des Kapselbodens weiter auf dem Kapselboden aufliegt oder am Kapselboden befestigt ist. Vorteilhafterweise wird somit ein Verrutschen des Filterelements verhindert und die Dichtwirkung zwischen Kapselkörper und Filterelement vergrößert, wobei aber gleichzeitig ein Anheben des Filterelements in seinem Zentralbereich weiterhin ermöglicht wird. Das Filterelement ist dabei vorzugsweise elastisch ausgebildet.

Gemäß eines weiteren Gegenstands oder einer weiteren Ausführungsform der vorliegenden Erfindung ist vorgesehen, dass das Filterelement einen Materialspeicher aufweist. In vorteilhafter Weise ermöglicht ein Materialspeicher, dass das Filterelement sich in seinem Zentralbereich vom Kapselboden abhebt, obwohl das Filterelement in seinem Randbereich fest (insbesondere stoffschlüssig) mit dem Kapselboden verbunden ist und im Wesentlichen nicht-elastisch ausgebildet ist. Der Materialspeicher umfasst insbesondere einen gewellten oder gefalteten Bereich im Filterelement, welcher sich teilweise glättet, wenn der Zentralbereich vom Kapselboden durch das Perforationsmittel abgehoben wird. Auf diese Weise ist sichergestellt, dass bei einer Perforation des Kapselbodens durch ein äußeres Perforationsmittel das Filterelement sich in seinem Zentralbereich vom Kapselboden abhebt und Material des Filterelements aus dem Materialspeicher in Richtung des Zentralbereichs nachrückt, so dass die sich in Folge des Abhebens vergrößernde Oberfläche des Filterelements durch Material aus dem Materialspeicher kompensiert wird.

Ein weiterer Gegenstand der vorliegenden Erfindung ist ein Verfahren zur Herstellung eines Getränks mit einer erfindungsgemäßen Portionskapsel, wobei in einem ersten Verfahrensschritt die Portionskapsel bereitgestellt wird, wobei in einem zweiten Verfahrensschritt der Kapselboden mittels eines äußeren Perforationsmittels perforiert wird und wobei in einem dritten Verfahrensschritt das Filterelement zumindest teilweise vom Kapselboden beabstandet wird. Im dritten Verfahrensschritt wird das Filterelement vorzugsweise vom Perforationsmittel derart vom Kapselboden angehoben, dass es sich vom perforierten Kapselboden beabstandet. Der Kapselboden wird dabei im Bereich eines zentralen Punkts perforiert, so dass gleichzeitig das Filterelement hauptsächlich in seinem Zentralbereich angehoben wird, während es in seinem Randbereich vorzugsweise weiter auf dem Kapselboden aufliegt oder am Kapselboden befestigt bleibt. Auf diese Weise wird die Dichtwirkung zwischen Kapselkörper und Filterelement durch das Anheben des Zentralbereichs nicht beeinträchtigt.

Erfindungsgemäss ist vorgesehen, dass das Filterelement bei der Beabstandung des Zentralbereichs vom Kapselboden zumindest teilweise gedehnt wird. Auf diese Weise wird eine stoffschlüssige Befestigung des Randbereichs des Filterelements am Kapselboden ermöglicht, wobei sich trotzdem das Filterelement im Zentralbereich vom Kapselboden abheben kann. Hierdurch werden die Vorteile einer maximalen Dichtwirkung mit den Vorteilen des sich anhebenden Filterelements verknüpft.

Gemäß einer weiteren Ausführungsform der vorliegenden Erfindung ist vorgesehen, dass bei der Beabstandung des Zentralbereichs vom Kapselboden während des dritten Verfahrensschrittes Material des Filterelements aus dem Materialspeicher in Richtung des Kapselbodens nachrückt, wobei insbesondere ein gewellter oder gefalteter Bereich des Filterelements zumindest teilweise geglättet wird. Auf diese Weise wird ebenfalls eine stoffschlüssige Befestigung des Randbereichs des Filterelements am Kapselboden ermöglicht, wobei sich trotzdem das Filterelement im Zentralbereich vom Kapselboden abheben kann. Der Materialspeicher erstreckt sich vorzugsweise um den Zentralbereich des Filterelements herum.
Die zu einem Gegenstand der vorliegenden Erfindung gemachten Ausführungen gelten für die anderen Gegenstände gleichermaßen und umgekehrt.

Ausführungsbeispiele der Erfindung sind in den Figuren dargestellt und in der nachfolgenden Beschreibung näher erläutert. Die Figuren sind lediglich beispielhaft beschrieben und schränken den allgemeinen Erfindungsgedanken nicht ein. Die Beschreibung gilt für alle Gegenstände der vorliegenden Erfindung gleichermaßen.
- **Figur 1**: zeigt einen Längsschnitt durch eine Portionskapsel gemäß einer ersten Ausführungsform der vorliegenden Erfindung, die für die Zubereitung von Espresso eingerichtet ist.
- **Figur 2**: zeigt einen Längsschnitt durch eine in einer geschlossenen Brühkammer liegende Portionskapsel gemäß der ersten Ausführungsform.
- **Figur 3**: zeigt einen Längsschnitt durch eine in einer geschlossenen Brühkammer liegende Portionskapsel gemäß einer zweiten Ausführungsform.
- **Figuren 4a, 4b**: zeigen schematische Schnittbildansichten einer Portionskapsel gemäß einer dritten Ausführungsform.
- **Figuren 5a, 5b**: zeigen schematische Schnittbildansichten einer Portionskapsel gemäß einer vierten Ausführungsform.
- **Figuren 6a, 6b**: zeigen schematische Schnittbildansichten einer Portionskapsel gemäß einer fünften Ausführungsform.
- **Figuren 7a, 7b**: zeigen schematische Schnittbildansichten einer Portionskapsel gemäß einer sechsten Ausführungsform.
- **Figuren 8a, 8b**: zeigen schematische Aufsichten eines Kapselbodens einer Portionskapsel gemäß einer weiteren Ausführungsform der vorliegenden Erfindung.
- **Figur 9**: zeigt eine Schnittbildansicht einer Portionskapsel gemäß einer achten Ausführungsform.
- **Figur 10**: zeigt ein Perforationsmittel, das in das Filterelement eindringt.
- **Figur 11**: zeigt ein Perforationsmittel, das das Filterelement durchdringt.
- **Figuren 12a -c**: zeigen unterschiedliche Ausführungsformen des Filterelementes mit Filz, insbesondere Nadelfilz.

In den verschiedenen Figuren sind gleiche Teile stets mit den gleichen Bezugszeichen versehen und werden daher in der Regel auch jeweils nur einmal benannt bzw. erwähnt.

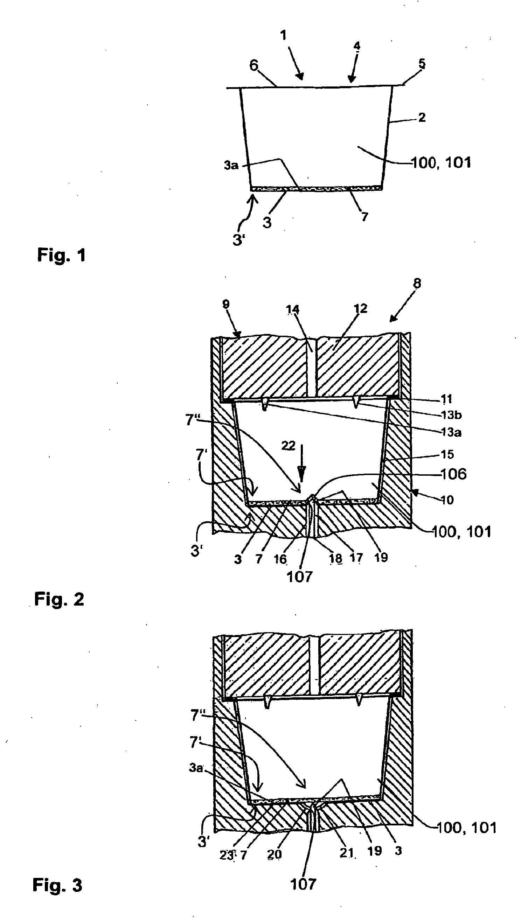

In **Figur 1** ist eine erste Ausführungsform der erfindungsgemäßen Portionskapsel 1 dargestellt. Die Portionskapsel 1 umfasst einen kegelstumpfförmigen Kapselkörper 2 mit einem geschlossenen Kapselboden 3 und mit einem an seiner Einfüllseite 4 angeordneten Kragenrand 5, auf den eine Deckelfolie 6 aufgeschweißt oder geklebt ist. Zwischen dem Kapselboden 3 und der Deckelfolie 6 ist somit ein, vorzugsweise luft- und aromadicht verschlossener Hohlraum 100, ausgebildet, welcher mit einer pulver- und granulatförmigen Getränkesubstanz 101 gefüllt ist. Die Getränkesubstanz 101 umfasst dabei beispielsweise ein Kaffee-, Kakao-, Tee- und/oder Milchpulver (bzw. -granulat). Auf der Innenseite 3a des geschlossenen Kapselkörperbodens 3, d.h. innerhalb des Hohlraums 100, ist ein Filterelement 7, bestehend aus einem Vliesfilter angeordnet. Das Filterelement 7 ist fest, d.h. vorzugsweise stoffschlüssig, mit der Innenseite 3a des Kapselkörperbodens 3 verbunden. Das Filterelement 7 ist nur in einem Randbereich 3' des Kapselbodens 3 am Kapselboden 3 stoffschlüssig befestigt. Das Vlies umfasst vorzugsweise ein aus Polyester-Feinfasern hergestellten Vliesstoff. Die Fasern werden besonders bevorzugt mittels eines Kalanders thermisch miteinander verbunden, beispielsweise werden eine Vielzahl von extrudierten Polyesterfasern aufeinander und nebeneinander angeordnet und anschließend mittels beheizten Walzen verfestigt (flach kalandriert). Der Vliesstoff umfasst einen Wirrfaser- und/oder faserorientierten-Vliesstoff. Das Vlies umfasst bevorzugt eine Massenbelegung (auch als Grammatur oder Flächengewicht bezeichnet) zwischen 40 und 100 Gramm pro Quadratmeter, besonders bevorzugt zwischen 60 und 80 Gramm pro Quadratmeter und ganz besonders bevorzugt von im Wesentlichen 70 Gramm pro Quadratmeter auf. Das Filterelement bzw. das Vlies weist bevorzugt eine Dicke zwischen 0,20 und 0,8 Millimetern, besonders bevorzugt zwischen 0,25 und 0,39 Millimetern und ganz besonders bevorzugt von im Wesentlichen 0,32 Millimetern auf. Das Vlies ist derart ausgebildet, dass die Luftdurchlässigkeit des Vlieses bei 100 Pascal zwischen 1000 und 3000 l/(m²s), bevorzugt zwischen 1500 und 2500 (l/m²s) und besonders bevorzugt im Wesentlichen bei 2000 l/(m²s) liegt. Das Vlies ist ferner vorzugsweise derart ausgebildet, dass die Höchstzugkraft in Längsrichtung im Wesentlichen 110 Newton pro 5 Zentimeter und in Querrichtung im Wesentlichen 67 Newton pro 5 Zentimeter beträgt, wobei die HöchstzugkraftDehnung in Längsrichtung im Wesentlichen 30 Prozent und in Querrichtung im Wesentlichen 38 Prozent umfasst.

In **Figur 2** ist eine Portionskapsel 1 gemäß der in Figur 1 illustrierten ersten Ausführungsform dargestellt, wobei die Portionskapsel 1 in der Figur 2 in einer geschlossenen Brühkammer 8 angeordnet ist. Die Brühkammer 8 besteht aus einem ersten Brühkammerelement 9 und einem zweiten Brühkammerelement 10, wobei das erste Brühkammerelement 9 zur Einführung der Portionskapsel 1 beweglich gegenüber dem zweiten Brühkammerelement 10 oder umgekehrt vorgesehen ist. Zwischen den beiden Brühkammerelementen 9, 10 ist eine Dichtung 11 angeordnet. Das erste Brühkammerelement 9 besteht im Wesentlichen aus einem Schließkolben 12 mit Einstechelementen 13a, 13b zur Öffnung der Deckelfolie 6 der Portionskapsel 1, einer Zubereitungsflüssigkeitszuführung 14 und der Dichtung 11. Das zweite Brühkammerelement 10 besteht im Wesentlichen aus einer die Portionskapsel 1 teilweise umschließenden Brühkammerglocke 15 mit einem am Boden der Brühkammerglocke 15 angeordneten Öffnungsdorn 16, der mit Ablaufrillen 17 versehen ist, und einem Getränkeablauf 18. Zur Aufnahme der Portionskapsel 1 befindet sich die Brühkammer 8 in einem nicht dargestellten geöffneten Zustand, in welchem das erste und das zweite Brühkammerelement 9, 10 voneinander beabstandet sind, um eine Zuführung der Portionskapsel 1 zu gewährleisten, und dem dargestellten geschlossenen Zustand, in welchem ein Zubereitungsvorgang zur Herstellung eines Getränks mittels der Portionskapsel 1 durchführbar ist. Im geschlossenen Zustand ist die Brühkammer 8 druckdicht verschlossen. Beim Überführen der Brühkammer 8 vom geöffneten Zustand in den abgebildeten geschlossenen Zustand wird die Deckelfolie 6 von den Einstechelementen 13a, 13b durchstochen, so dass Zubereitungsflüssigkeit, insbesondere heißes Brühwasser, durch die Zubereitungsflüssigkeitszuführung 14 unter Druck in den Hohlraum 100 der Portionskapsel 1 gelangt. Ferner wird beim Schließen der Brühkammer 8 der Kapselboden 3 von dem als Öffnungsdorn 16 ausgebildeten Perforationsmittel perforiert, so dass eine Ausgangsöffnung 107 in der Portionskapsel 1 erzeugt wird, durch welche die hergestellte Getränkeflüssigkeit aus der Portionskapsel 1 in Richtung des Getränkeablaufs 18 heraustreten kann. Zur Unterstützung der Ableitung der Getränkeflüssigkeit weist der Öffnungsdorn 16 auf seiner Mantelfläche die Ablaufrillen 17 auf. In der Darstellung ist der Boden 3 der in der Brühkammer 9, 10 befindlichen Portionskapsel 1 von dem Öffnungsdorn 16 des zweiten Brühkammelementes durchstochen, aber das über der Einstichstelle liegende Filterelement 7 ist von der Einstechspitze 19 des Öffnungsdornes 16 leicht angehoben, jedoch nicht durchstochen. Dies wird insbesondere dadurch erreicht, dass der Zentralbereich 7" nicht stoffschlüssig mit dem Kapselboden 3 verbunden ist, sondern das Filterelement 7 lediglich im Randbereich 3' des Kapselbodens 3 stoffschlüssig mit dem Kapselboden 3 verbunden ist, so dass es in Folge des mechanischen Kontaktes mit der Spitze des Öffnungsdorns 16 lediglich vom Kapselboden 3 angehoben wird und somit unperforiert bleibt (d.h. nicht vom Öffnungsdorn 16 perforiert wird). Im Randbereich 3' des Kapselbodens 3 bzw. im Randbereich 7' des Filterelements 7 bleiben der Kapselboden 3 und das Filterelement 7 miteinander in Kontakt und insbesondere stoffschlüssig miteinander verbunden, so dass keine Getränkesubstanz 101 um das Filterelement 7 herum in den Getränkeablauf 18 gelangt. Der Kapselboden 3 weist in seinem zentralen Punkt 106, in welchem der Kapselboden 3 von dem Öffnungsdorn 16 perforiert wird, optional eine Sollbruchstelle 104 auf, so dass ein vergleichsweise stumpfer Öffnungsdorn 16 zur Perforation des Kapselbodens 3 ausreichend ist und so die Gefahr, dass versehentlich auch das Filterelement 7 vom Öffnungsdorn 16 perforiert wird, ausgeräumt wird.

In **Figur 3** ist eine Portionskapsel 1 gemäß einer nicht erfindungsgemäßen Ausführungsform dargestellt, wobei die zweite Ausführungsform im Wesentlichen der in Figur 2 illustrierten ersten Ausführungsform gleicht und die Portionskapsel 1 ebenfalls in einer geschlossenen Brühkammer 8 dargestellt ist. Im Unterschied zur ersten Ausführungsform weist der Portionskapselboden 3 im Einstechbereich des Öffnungsdornes 16 jedoch eine gegen eine Einbuchtung 20 im Brühkammerboden 3a gerichtete Ausbuchtung 21 auf (die Ausbuchtung 21 ist somit in eine der Einfüllseite 4 entgegengesetzte Richtung gerichtet), in die der Öffnungsdorn 16 einsticht, ohne dabei das Filterelement 7 zu durchstechen. Ein Abheben des Filterelements 7 vom Kapselboden 3 ist somit insbesondere nicht erforderlich. Zur Herstellung des Getränkes wird wiederum nach dem Einbringen der Portionskapsel 1 in die Brühkammer 8, die Brühkammer 8 geschlossen. Während des Schließvorganges wird die Deckelfolie 6 der Portionskapsel 1 mittels der Einstechmittel 13a, 13b perforiert und nach erfolgtem Zusammenführen und Abdichten des ersten und des zweiten Brühkammerelementes 9, 10 (mittels der Dichtung 11) wird Brühwasser über den Flüssigkeitseinlass 6 zur Verfügung gestellt. Ebenso sticht während des Schließvorganges der Brühkammer der Öffnungsdorn 16 eine Öffnung in den Boden 3 der Portionskapsel 1. Das über der Einstichstelle liegende Filterelement 7 ist in seiner Dicke und Reißfestigkeit auf die Eindringtiefe der Einstechspitze 19 des Öffnungsdornes 16 abgestimmt, so dass das Filterelement 7 nicht durchstoßen wird. Alternativ liegt das Filterelement 7 über der Ausbuchtung 21 des Kapselbodens 3, die in der Einbuchtung des Brühglockenbodens 23 liegt, und der Öffnungsdorn 16 sticht lediglich in die Ausbuchtung 21 des Kapselbodens 3 und gelangt nicht bis zum Filterelement 7. Sodann strömt die Flüssigkeit, bei der Herstellung von Kaffee beispielsweise heißes Wasser, in die Kapsel 1 ein. In der Kapsel durchströmt diese Flüssigkeit das Getränkesubstrat 101 und extrahiert und/oder löst die für die Getränkeherstellung benötigten Substanzen aus dem Getränkesubstrat 101 aus. Die Strömung der Flüssigkeit in dem Getränkesubstrat 101 ist durch das Bezugszeichen 22 illustriert. Danach strömt das resultierende Getränk durch das zwischen dem Getränkesubstrat 101 und das auf dem Kapselboden 3 angeordnete Filterelement 7, welches verhindert, dass Bestandteile des Getränkesubstrates 101 partikelförmig in das resultierende Getränk gelangen und über die von dem Öffnungsdorn 16 in den Kapselboden 3 gestochene Öffnung und über die Ablaufrillen 17 des Öffnungsdornes 16 weiter in ein Auffanggefäß, beispielsweise eine Tasse oder Kanne, gelangen.

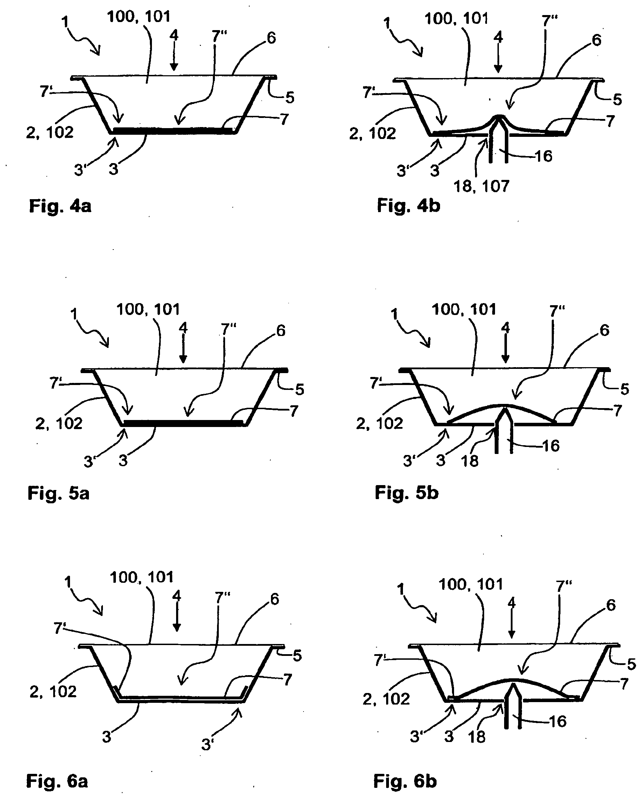

In **Figuren 4a und 4b** sind schematische Schnittbildansichten einer nicht erfindungsgemässen Portionskapsel 1 dargestellt, die dritte Ausführungsform gleicht im Wesentlichen der in Figuren 1 und 2 illustrierten ersten Ausführungsform, wobei das Filterelement 7 elastisch ausgebildet ist. In Figur 4a ist die Portionskapsel 1 in ihrer Ausgangsposition dargestellt, während sie in Figur 4b von dem Perforierungsmittel 16 perforiert dargestellt ist (die Portionskapsel 1 befindet sich in Figur 4b in einer nicht weiter dargestellten Brühkammer 8). Durch die elastische Ausbildung des Filterelements 7 wird das Filterelement 7 in seinem Zentralbereich 7" bei einem mechanischen Kontakt mit dem Perforierungsmittel 16 in Richtung der Einlassseite 4 gedehnt, ohne von dem Perforierungsmittel 16 perforiert oder zerrissen zu werden. Im Randbereich des Kapselbodens 3' bleibt das Filterelement 7' fest bzw. stoffschlüssig mit dem Kapselboden 3 verbunden, so dass keine Getränkesubstanz 101 vom Hohlraum 100 am Filterelement 7 vorbei in Richtung der durch das Perforierungsmittel 16 erzeugten Ausgangsöffnung 107 gelangt.

In **Figuren 5a und 5b** sind schematische Schnittbildansichten einer nicht erfindungsgemässen Portionskapsel 1 dargestellt, wobei die vierte Ausführungsform im Wesentlichen identisch zu der in Figuren 4a und 4b illustrierten dritten Ausführungsform ist. Das Filterelement 7 ist dabei jedoch nicht-elastisch ausgebildet und wird von dem Perforationsmittel 16 nahezu vollständig vom Kapselboden 3 angehoben. Da sich die Grundfläche des Filterelements 7 hierbei nicht verändert, rutschen die Randbereiche 7' des Filterelements nach innen, d.h. in Richtung des zentralen Punkts 106 des Kapselbodens 3'.

In **Figuren 6a und 6b** schematische Schnittbildansichten einer nicht erfindungsgemässen Portionskapsel 1 dargestellt, wobei die fünfte Ausführungsform im Wesentlichen der in Figuren 5a und 5b illustrierten sechsten Ausführungsform gleicht. Das Filterelement 7 ist insbesondere flexibel ausgebildet und weist eine Grundfläche auf, welche größer als die Grundfläche des Kapselbodens 3 ist. Dies führt dazu, dass der Randbereich 7' des Filterelements 7' sich in der in Figur 6a dargestellten Ausgangslage der Portionskapsel 1 an einen unteren Teil des Seitenwandbereichs 102 des Kapselkörpers 2, welcher sich von dem Kragenrand 5 bis zum Kapselboden 3 erstreckt, anschmiegt. Wenn nun der Kapselboden 3 durch das Perforierungsmittel 16 perforiert wird und das Filterelement 7 in seinem Zentralbereich 7" vom Kapselboden 3 durch das Perforierungsmittel 16 abgehoben wird, rückt der Randbereich 7' des Filterelements 7 in Richtung des Kapselbodens 3 nach. Auf diese Weise wird sichergestellt, dass der Randbereich 3' des Kapselbodens 3 stets mit dem Filterelement 7 bedeckt bleibt und somit keine Getränkesubstanz 101 am Filterelement 7 vorbei ungefiltert in Richtung Ablauf 18 gelangt.

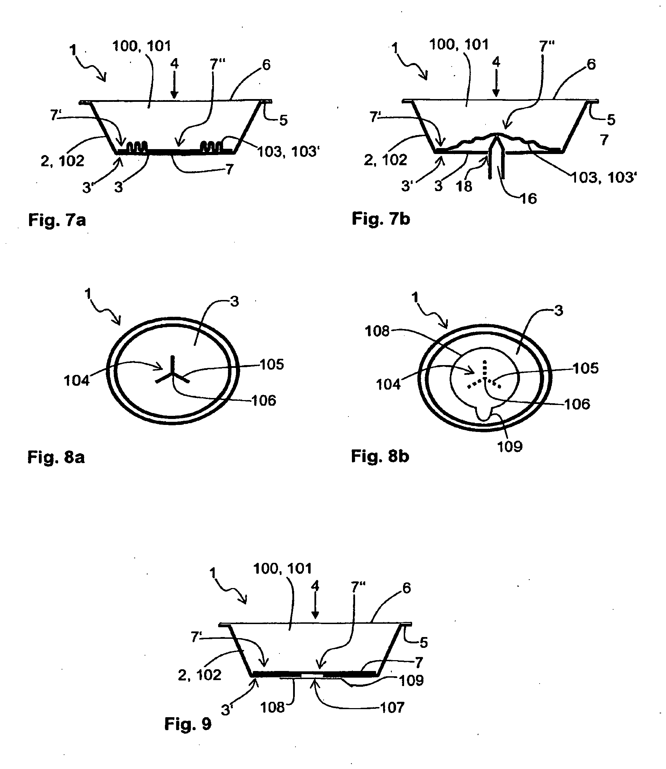

In **Figuren 7a und 7b** sind Schnittbildansichten einer nicht erfindungsgemässen Portionskapsel 1 dargestellt. Die sechste Ausführungsform gleicht im Wesentlichen der in Figur 5a und 5b illustrierten vierten Ausführungsform, wobei das Filterelement 7 einen Materialspeicher 103 aufweist. Der Materialspeicher 103 umfasst einen gewellten Bereich 103', d.h. einen Bereich in welchem überschüssiges Material des Filterelements 7 aufgestaut ist. Wenn nun der Zentralbereich 7" durch das Perforierungsmittel 16 vom Kapselboden 3 angehoben wird, wirken Zugkräfte auf den Materialspeicher 103, wodurch sich der gewellte Bereich 103' zumindest teilweise glättet und somit ausreichend Material zur Verfügung steht, dass der Zentralbereich 7" in ausreichender Weise angehoben werden kann und eine Zerreißen oder Perforieren des Filterelements 7 unterbunden wird.

In **Figuren 8a und 8b** ist eine Ansicht eines Kapselbodens 3 einer Portionskapsel 1 gemäß einer weiteren Ausführungsform der vorliegenden Erfindung dargestellt, die weitere Ausführungsform gleicht im Wesentlichen der in Figuren 1 (erfindungsgemäß) und 2 (nicht erfindungsgemäß) illustrierten ersten Ausführungsform, wobei die Portionskapsel 1 in Figur 8 von "unten" dargestellt ist. In dieser Ansicht ist die optionale Sollbruchstelle 104 zu erkennen, welche drei Schwächungslinien 105 umfasst, die sternförmig und in radialer Richtung um den zentralen Punkt 106 auf dem Kapselboden 3 herum angeordnet sind. Entlang der Schwächungslinien 105 weist der Kapselboden 3 eine reduzierte Materialstärke auf und/oder ist der Kapselboden 3 vorperforiert, um eine Perforation in der Brühkammer 8 zu begünstigen. Damit das Aroma der Getränkesubstanz 101 auch bei einem vorperforierten Kapselboden 3 über längere Lagerzeiten aufrecht erhalten bleibt, ist der Kapselboden 3 zumindest im Bereich der Sollbruchstelle 104 vorzugsweise mit einer perforierbaren oder von Hand abziehbaren Folie 108 versiegelt. Die Folie 108 klebt dazu beispielsweise auf der Außenseite des Kapselbodens 3 und ist mit einer Abziehlasche 109 versehen, welche nicht am Kapselboden 3 klebt und an welcher die Folie 108 von Hand abgezogen werden kann. Eine beispielhafte Ausführungsform mit Schwächungslinien 105 in Form von Perforationen im Kapselboden 3, sowie mit einer Folie 108 ist in Figur 8b illustriert.

In **Figur 9** ist eine Schnittbildansicht einer nicht erfindungsgemäßen Portionskapsel 1 dargestellt. Die achte Ausführungsform gleich im Wesentlichen der in Figur 1 dargestellten ersten Ausführungsform, wobei die Portionskapseln 1 der achten Ausführungsform mit einer permanenten Ausgangsöffnung 107 im Kapselboden 3 ausgestattet ist, welche in der Ausgangslage mit der Folie 108 abgedichtet ist. Sollbruchstellen weist die Portionskapsel 1 daher nicht auf. Die Folie 108 weist dabei ebenfalls die Abziehlasche 109 zum Abziehen der Folie 108 von Hand auf. Eine Perforation des Kapselbodens 3 mittels eines äußeren Perforationsmittels 16 ist nicht vorgesehen. Vielmehr wird dem Einlegen der Portionskapsel 1 in die Brühkammer 8 wird die Folie 108 mittels der Abziehlasche 109 einfach vom Kapselboden 3 abgezogen und der Brühvorgang kann anschließend direkt und ohne Perforierung des Kapselbodens 3 gestartet werden.

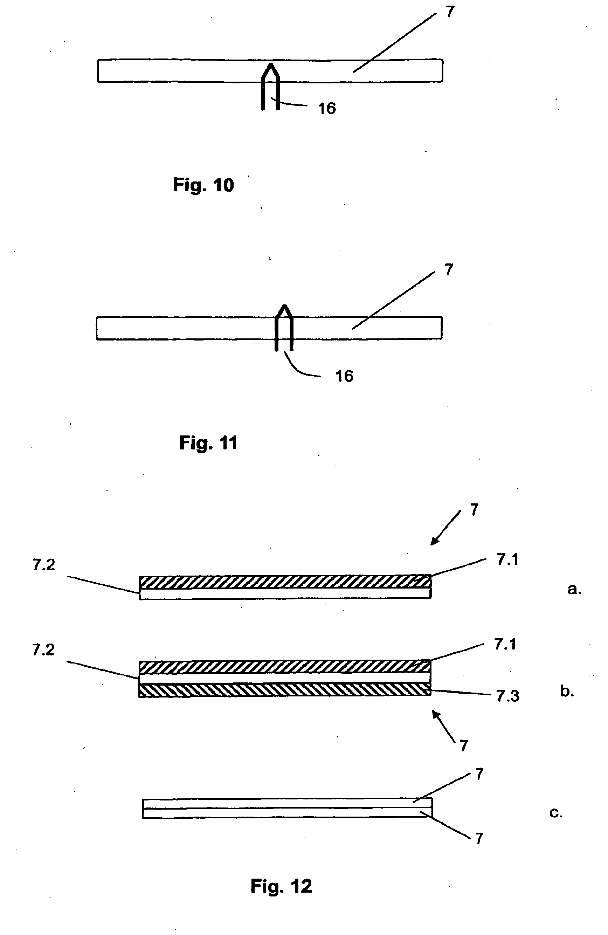

**Figuren 10** **(nicht erfindungsgemäss) und 11 (erfindungsgemäss)** zeigen eine weitere Ausführungsform. In dem vorliegenden Fall ist das Filterelement 7 so ausgeführt, dass das Performationsmittel 16 beim Eindringen in die Kapsel das Filterelement spannt, ansticht (Fig. 10) und/oder durchsticht, d.h. das Filterelement ist beispielsweise mit dem Boden der Kapsel zumindest abschnittsweise stoffschlüssig verbunden, an dem Boden möglichst großflächig anliegend vorgesehen und/oder gespannt.

**Figuren 12** **a - c** zeigen unterschiedliche Ausführungsformen eines Filterelementes 7 mit einer Filzstruktur 7.1, insbesondere Nadelfilzstruktur. Dieses Filterelement 7 weist vorzugsweise eine Trägerstruktur 7.2, beispielsweise eine Gewebestruktur auf. An dieser und/oder in diese Gewebestruktur 7.2 wird auf der gesamten, dem Kaffeepulver oder Tee zugewandten Oberfläche eine Filzstruktur 7.1, angeordnet und beispielsweise durch Nadelfilzen mit dieser verbunden, was in Figur 12a dargestellt ist.
Die Ausführungsform gemäß Figur 12b weist zwei Filzstrukturen 7.1 und 7.3 auf, die jeweils an und/oder in der Trägerstruktur angeordnet sind. Beide Strukturen erstrecken sich vorzugsweise über den gesamten Querschnitt, d.h hier die gesamte kreisförmige Oberfläche, des Filterelementes. Die Filzstrukturen 7.1 und 7.3 können gleich oder unterschiedlich dick sein. Vorzugsweise ist die Filzstruktur 7.1 dünner ausgeführt als die Schicht 7.3 oder umgekehrt. Die Trägerschicht ist dann bezüglich der Mitte, bezogen auf die Dicke, des Filterelementes versetzt vorgesehen sein. Die Strukturen 7.1 und 7.3 können aus unterschiedlichen oder demselben Materiali(en) hergestellt sein. Diese betreffen nicht nur die Substanz aus der sie hergestellt sind, sondern auch die Fadendurchmesser und/oder die Fadenlänge aus denen die Filzstrukturen gefertigt werden. Zwischen den beiden Strukturen 7.1 und 7.3 ist eine Trägerstruktur 7.2 vorgesehen, in der sich kein oder nur wenig Filzstruktur befindet und die vorzugsweise Querströmungen zulässt.
Figur 12c zeigt noch eine weitere Ausführungsform eines Filterelementes mit Filzstruktur. In dem vorliegenden Fall sind zwei Filterelemente 7 mit einer Filzstruktur, wie sie beispielsweise gemäß den Figuren 12a und b beschrieben wurden, übereinander angeordnet. Die Filterelemente 7 können lediglich aufeinander liegen oder miteinander verbunden sein. Die Filterelemente 7 können aber auch nur Filz ohne Trägerstruktur aufweisen.

Alle Filterelemente mit einer Filzstruktur haben den Vorteil, dass sie einen geringen Druckverlust aufweisen, bzw. dass der Druckabbau entlang des Fliterelementes mit einem geringen Gradienten erfolgt. Dadurch kann beispielsweise Kaffee ohne Crema, d.h. Schaum, oder Tee ohne Schaum hergestellt werden. Vorzugsweise weist das Filterelement mit der Filzstruktur einen größeren Durchmesser auf als der Boden der Kapsel, so dass es sich im Randbereich gegen die Wandung der Kapsel drückt.

Vorzugsweise ist das Filterelement mit Filzstruktur, insbesondere vollständig, aus PETgefertigt.

## Patentansprüche

1. Portionskapsel (1) zur Herstellung eines Getränks aufweisend einen Kapselkörper (2) mit einem Kapselboden (3) und einer Einfüllseite (4), wobei der Kapselboden (3) geschlossen und erst in einer Brühkammer mittels eines von außen auf den Kapselboden (3) wirkenden Perforationsmittels zur Erzeugung einer Auslauföffnung (107) für das hergestellte Getränk perforierbar ist, wobei zwischen dem Kapselboden (3) und der Einfüllseite (4) ein Hohlraum (100) zur Aufnahme eines pulverförmigen oder flüssigen Getränkesubstrats (101) ausgebildet ist und wobei zwischen dem Getränkesubtrat (101) und dem Kapselboden (3) ein Filterelement (7) angeordnet ist, wobei das Filterelement (7) ein Vlies ist, welches im Bereich des Kapselbodens (3) angeordnet ist, **dadurch gekennzeichnet, dass** das Vlies einem aus Kunststoff-Feinfasern hergestellten Vliesstoff umfass, wobei das Filterelement (7) derart ausgebildet ist und an dem Kapselboden (3) befestigt ist, dass bei einer Perforation des Kapselbodens (3) durch ein äußeres Perforationsmittel (16) das Filterelement (7) durchstochen wird, wobei das Filterelement (7) elastisch ausgebildet ist und in einem Randbereich (3') des Kapselbodens (3) am Kapselboden (3) befestigt ist und wobei das Filterelement (7) derart ausgebildet ist, dass bei einer Perforation des Kapselbodens (3) durch ein äußeres Perforationsmittel (16) zumindest teilweise ein Abheben des Filterelements (7) vom Kapselboden (3) zur Erzeugung eines Sammelbeckens unterhalb des Filterelements (7) für das durch da Filterelement (7) hindurchtretende Getränk erfolgt, wobei das Filterelement (7) sich nur einem Zentralbereich (7") vom Kapselboden (3) abhebt und im Randbereich (3') des Kapselbodens (3) weiter am Kapselboden (3) befestigt ist.

2. Portionskapsel (1) nach Anspruch 1, **dadurch gekennzeichnet, dass** das Vlies einen aus Polyester-Feinfasern hergestellten Vliesstoff umfasst und/oder dass das Vlies eine Massenbelegung zwischen 40 und 100 Gramm pro Quadratmeter, bevorzugt zwischen 60 und 80 Gramm pro Quadratmeter und besonders bevorzugt von im Wesentlichen 70 Gramm pro Quadratmeter aufweist und/oder dass das Vlies eine Dicke zwischen 0,20 und 0,8 Millimetern, bevorzugt zwischen 0,25 und 0,39 Millimetern und besonders bevorzugt von im Wesentlichen 0,32 Millimetern aufweist und/oder dass das Vlies eine Luftdurchlässigkeit bei einem Druck von 100 Pascal zwischen 1000 und 3000 l(m²s), bevorzugt zwischen 1500 und 2500 l(m²s) und besonders bevorzugt im Wesentlichen bei 2000 l(m²s) aufweist.

3. Portionskapsel (1) nach einem der vorhergehenden Ansprüche, **dadurch gekennzeichnet, dass** das Filterelement (7) elastisch ausgebildet ist und zumindest in seinem Randbereich (7') im Bereich des Kapselbodens (3) angeordnet ist.

4. Portionskapsel (1) nach einem der vorhergehenden Ansprüche, **dadurch gekennzeichnet, dass** das Filterelement (7) an den Boden der Kapsel gesiegelt, insbesondere ultraschallgesiedelt und vorzugsweise gespannt ist.

5. Portionskapsel (1) nach einem der vorhergehenden Ansprüche, **dadurch gekennzeichnet, dass** das Filterelement (7) im Hohlraum (100) angeordnet ist und auf einer der Einfüllseite (4) zugewandten Seite des Kapselbodens (3) aufliegt.

6. Portionskapsel (1) nach einem der vorhergehenden Ansprüche, **dadurch gekennzeichnet, dass** das Filterelement (7) den Kapselboden (3) vollständig oder nur teilweise überdeckt.

7. Portionskapsel (1) nach einem der vorhergehenden Ansprüche, **dadurch gekennzeichnet, dass** das Filterelement (7) am Kapselboden befestigt ist, wobei das Filterelement (7) vorzugsweise stoffschlüssig am Kapselboden (3) befestigt ist.

8. Portionskapsel (1) nach einem der vorhergehenden Ansprüche, **dadurch gekennzeichnet, dass** das Filterelement (7) in einem Randbereich (7') des Filterelements (7) am Seitenwandbereich (102) befestigt ist.

9. Portionskapsel (1) nach einem der vorhergehenden Ansprüche, **dadurch gekennzeichnet, dass** der Kapselboden (3) eine Ausbuchtung (21) in eine der Einfüllseite (4) entgegengesetzte Richtung (103) aufweist.

10. Portionskapsel (1) nach einem der vorhergehenden Ansprüche, **dadurch gekennzeichnet, dass** der Kapselboden (3) eine Sollbruchstelle (104) aufweist, welche dazu vorgesehen ist, infolge eines mechanischen Kontakts mit einem äußeren Perforationsmittel (16) aufzureißen.

11. Portionskapsel (1) nach Anspruch 10, **dadurch gekennzeichnet, dass** die Sollbruchstelle (104) eine Mehrzahl von sternförmig um einen zentralen Punkt (106) des Kapselbodens (3) angeordnete Schwächungslinien (105) umfasst, wobei der Kapselboden (3) entlang der Schwächungslinien (105) eine reduzierte Materialstärke aufweist und/oder perforiert ist.

12. Portionskapsel (1) nach einem der vorhergehenden Ansprüche, **dadurch gekennzeichnet, dass** der Kapselboden (3) eine Ausgangsöffnung (107) aufweist, welche vorzugsweise mit einer Folie (108) abgedichtet ist, wobei die Folie (108) besonders bevorzugt eine Abziehlasche (109) zum Abziehen der Folie von der Hand aufweist.

13. Verfahren und Herstellung eines Getränks mit einer Portionskapsel (1) nach einem der vorhergehenden Ansprüche, **dadurch gekennzeichnet, dass** in einem ersten Verfahrensschritt die Portionskapsel (1) bereitgestellt wird, dass in einem zweiten Verfahrensschritt der Kapselboden (3) mittels eines äußeren Perforationsmittels (16) perforiert wird, und dass in einem dritten Verfahrensschritt das Filterelement (7) zumindest teilweise vom Kapselboden (3) beabstandet, wobei das Filterelement (7) sich nur in einem Zentralbereich (7") vom Kapselboden (3) abhebt und im Randbereich (3') des Kapselbodens (3) weiter am Kapselboden (3) befestigt bleibt.

14. Verfahren nach Anspruch 13, **dadurch gekennzeichnet, dass** das Filterelement (7) bei der Beabstandung des Zentralbereichs (7") vom Kapselboden (3) zumindest teilweise gedehnt wird.

15. Verwendung einer Portionskapsel (1) nach einem der Ansprüche 1 bis 12 zur Herstellung eines Getränks, vorzugsweise zur Herstellung eines Kaffee-, Kakao-, Tee- und/oder Milchgetränks.

## Claims

1. Portion capsule (1) for producing a beverage, having a capsule body (2) with a capsule base (3) and a filling side (4), with the capsule base (3) being closed and it being possible for the said capsule base to be perforated for the first time in a brewing chamber by means of a perforation means which acts on the capsule base (3) from the outside for the purpose of generating an outflow opening (107) for the produced beverage, with a cavity (100) for accommodating a pulverulent or liquid beverage base (101) being formed between the capsule base (3) and the filling side (4), and with a filter element (7) being arranged between the beverage base (101) and the capsule base (3), wherein the filter element (7) is a non-woven which is arranged in the region of the capsule base (3), **characterized in that** the non-woven comprises a non-woven material which is produced from fine plastic fibers, with the filter element (7) being formed and attached to the capsule base (3) in such a way that, when the capsule base (3) is perforated by an external perforation means (16), the filter element (7) is pierced, with the filter element (7) being elastic and being attached to the capsule base (3) in an edge region (3') of the capsule base (3), and with the filter element (7) being formed in such a way that, when the capsule base (3) is perforated by an external perforation means (16), the filter element is at least partially lifted off from the capsule base (3) for the purpose of creating a collection tank beneath the filter element (7) for the beverage passing through the filter element (7), with the filter element (7) lifting off from the capsule base (3) only in a central region (7") and continuing to be attached to the capsule base (3) in the edge region (3') of the capsule base (3).

2. Portion capsule (1) according to Claim 1, **characterized in that** the non-woven comprises a non-woven material which is produced from fine polyester fibers, and/or **in that** the non-woven has a mass per unit area of between 40 and 100 grams per square meter, preferably of between 60 and 80 grams per square meter and particularly preferably of substantially 70 grams per square meter, and/or **in that** the non-woven has a thickness of between 0.20 and 0.8 millimeters, preferably of between 0.25 and 0.39 millimeters and particularly preferably of substantially 0.32 millimeters, and/or **in that** the non-woven has an air permeability of between 1000 and 3000 l/(m²s), preferably of between 1500 and 2500 l/(m²s) and particularly preferably substantially of 2000 l/(m²s) at a pressure of 100 pascal.

3. Portion capsule (1) according to one of the preceding claims, **characterized in that** the filter element (7) is elastic and is arranged, at least in its edge region (7'), in the region of the capsule base (3).

4. Portion capsule (1) according to one of the preceding claims, **characterized in that** the filter element (7) is sealed, in particular ultrasonically sealed and preferably stretched, at the base of the capsule.

5. Portion capsule (1) according to one of the preceding claims, **characterized in that** the filter element (7) is arranged in the cavity (100) and rests on a side of the capsule base (3) which faces the filling side (4).

6. Portion capsule (1) according to one of the preceding claims, **characterized in that** the filter element (7) completely or only partially covers the capsule base (3).

7. Portion capsule (1) according to one of the preceding claims, **characterized in that** the filter element (7) is attached to the capsule base (3), with the filter element (7) preferably being attached to the capsule base (3) in a cohesive manner.

8. Portion capsule (1) according to one of the preceding claims, **characterized in that** the filter element (7) is attached to the side wall region (102) in an edge region (7') of the filter element (7).

9. Portion capsule (1) according to one of the preceding claims, **characterized in that** the capsule base (3) has a protrusion (21) in a direction (103) opposing the filling side (4).

10. Portion capsule (1) according to one of the preceding claims, **characterized in that** the capsule base (3) has a predetermined breaking point (104) which is intended to tear open as a result of mechanical contact with an external perforation means (16).

11. Portion capsule (1) according to Claim 10, **characterized in that** the predetermined breaking point (104) has a plurality of lines of weakness (105) which are arranged in a star shape around a central point (106) of the capsule base (3), wherein the capsule base (3) has a reduced material thickness and/or is perforated along the lines of weakness (105).

12. Portion capsule (1) according to one of the preceding claims, **characterized in that** the capsule base (3) has an outlet opening (107) which is preferably sealed off by a film or foil (108), with the film or foil (108) particularly preferably having a pull-off tab (109) for pulling off the film or foil by hand.

13. Method for producing a beverage using a portion capsule (1) according to one of the preceding claims, **characterized in that** the portion capsule (1) is provided in a first method step, **in that** the capsule base (3) is perforated by means of an external perforation means (16) in a second method step, and **in that** the filter element (7) is at least partially spaced apart from the capsule base (3) in a third method step, with the filter element (7) lifting off from the capsule base (3) only in a central region (7") and continuing to remain attached to the capsule base (3) in the edge region (3') of the capsule base (3).

14. Method according to Claim 13, **characterized in that** the filter element (7) is at least partially stretched when the central region (7") is spaced apart from the capsule base (3).

15. Use of a portion capsule (1) according to one of Claims 1 to 12 for producing a beverage, preferably for producing a coffee, cocoa, tea and/or milk beverage.

## Revendications

1. Dosette sous forme de capsule (1) pour préparer une boisson comportant un corps de dosette (2) doté d'un fond de dosette (3) et d'un côté de remplissage (4), le fond de dosette (3) étant fermé et pouvant être perforé seulement dans une chambre d'infusion au moyen d'un moyen de perforation agissant depuis l'extérieur sur le fond de dosette (3) pour produire une ouverture de sortie (107) pour la boisson préparée, un espace creux (100) servant à recevoir un substrat de boisson (101) sous forme de liquide ou de poudre étant réalisé entre le fond de dosette (3) et le côté de remplissage (4) et un élément de filtre (7) étant disposé entre le substrat de boisson (101) et le fond de dosette (3), l'élément de filtre (7) étant un non-tissé disposé dans la zone du fond de dosette (3), **caractérisée en ce que** le non-tissé comprend une matière de non-tissé composée de fines fibres de matière plastique, l'élément de filtre (7) étant réalisé et étant fixé au fond de dosette (3) de telle sorte que dans le cas d'une perforation du fond de dosette (3) par un moyen de perforation extérieur (16), l'élément de filtre (7) soit percé, l'élément de filtre (7) étant réalisé sous forme élastique et étant fixé dans une zone de bord (3') du fond de dosette (3) sur le fond de dosette (3) et l'élément de filtre (7) étant réalisé de telle sorte que dans le cas d'une perforation du fond de dosette (3) par un moyen de perforation extérieur (16), un soulèvement de l'élément de filtre (7) du fond de dosette (3) se produise au moins en partie pour produire un bassin de collecte en dessous de l'élément de filtre (7) pour la boisson passant à travers l'élément de filtre (7), l'élément de filtre (7) se soulevant du fond de dosette (3) seulement dans une zone centrale (7") et étant encore fixé au fond de dosette (3) dans la zone de bord (3') du fond de dosette (3).

2. Dosette sous forme de capsule (1) selon la revendication 1, **caractérisée en ce que** le non-tissé comprend une matière de non-tissé fabriquée à partir de fines fibres de polyester et/ou que le non-tissé présente un taux massique d'occupation compris entre 40 et 100 grammes par mètre carré, de façon préférée entre 60 et 80 grammes par mètre carré et est de façon particulièrement préférée pour l'essentiel de 70 grammes par mètre carré et/ou que le non-tissé présente une épaisseur comprise entre 0,20 et 0,8 millimètre, de façon préférée entre 0,25 et 0,39 millimètre et est de façon particulièrement préférée pour l'essentiel de 0,32 millimètre et/ou que le non-tissé présente une perméabilité à l'air à une pression de 100 pascals comprise entre 1000 et 3000 l/(m²s), de façon préférée entre 1500 et 2500 l/(m²s) et est de façon particulièrement préférée pour l'essentiel de 2000 l/(m²s).

3. Dosette sous forme de capsule (1) selon l'une quelconque des revendications précédentes, **caractérisée en ce que** l'élément de filtre (7) est réalisé de façon élastique et est disposé au moins dans sa zone de bordure (7') dans la zone du fond de dosette (3).

4. Dosette sous forme de capsule (1) selon l'une quelconque des revendications précédentes, **caractérisée en ce que** l'élément de filtre (7) est scellé au niveau du fond de la dosette, notamment scellé aux ultrasons et de préférence tendu.

5. Dosette sous forme de capsule (1) selon l'une quelconque des revendications précédentes, **caractérisée en ce que** l'élément de filtre (7) est disposé dans l'espace creux (100) et repose sur un côté du fond de dosette (3) orienté vers le côté de remplissage (4).

6. Dosette sous forme de capsule (1) selon l'une quelconque des revendications précédentes, **caractérisée en ce que** l'élément de filtre (7) recouvre entièrement ou seulement en partie le fond de dosette (3).

7. Dosette sous forme de capsule (1) selon l'une quelconque des revendications précédentes, **caractérisée en ce que** l'élément de filtre (7) est fixé au fond de dosette (3), l'élément de filtre (7) étant de préférence fixé par complémentarité de matières au fond de dosette (3).

8. Dosette sous forme de capsule (1) selon l'une quelconque des revendications précédentes, **caractérisée en ce que** l'élément de filtre (7) est fixé à la zone de paroi latérale (102), dans une zone de bordure (7') de l'élément de filtre (7).

9. Dosette sous forme de capsule (1) selon l'une quelconque des revendications précédentes, **caractérisée en ce que** le fond de dosette (3) comporte un bombement (21) dans une direction (103) opposée au côté de remplissage (4).

10. Dosette sous forme de capsule (1) selon l'une quelconque des revendications précédentes, **caractérisée en ce que** le fond de dosette (3) comporte un point de rupture théorique (104) prévu pour se déchirer à la suite d'un contact mécanique établi avec le moyen de perforation extérieur (16).

11. Dosette sous forme de capsule (1) selon la revendication 10, **caractérisée en ce que** le point de rupture théorique (104) comprend une pluralité de lignes de fragilisation (105) en forme d'étoile disposées autour d'un point central (106) du fond de dosette (3), le fond de dosette (3) comportant une épaisseur de matière réduite et/ou étant perforées le long des lignes de fragilisation (105).

12. Dosette sous forme de capsule (1) selon l'une quelconque des revendications précédentes, **caractérisée en ce que** le fond de dosette (3) présente une ouverture de sortie (107) de préférence étanchéifiée au moyen d'un film (108), le film (108) comportant de façon particulièrement préférée une languette de retrait (109) permettant de retirer le film à la main.

13. Procédé de fabrication d'une boisson à l'aide d'une dosette sous forme de capsule (1) selon l'une quelconque des revendications précédentes, **caractérisé en ce que** la dosette sous forme de capsule (1) est amenée lors d'une première étape de procédé, que le fond de dosette (3) est perforé à l'aide d'un moyen de perforation extérieur (16) lors d'une deuxième étape de procédé et que l'élément de filtre (7) est écarté au moins en partie du fond de dosette (3) lors d'une troisième étape de procédé, l'élément de filtre (7) se soulevant du fond de dosette (3) seulement dans une zone centrale (7") et étant encore fixé au fond de dosette (3) dans la zone de bord (3') du fond de dosette (3).

14. Procédé selon la revendication 13, **caractérisé en ce que** l'élément de filtre (7) est étiré au moins en partie lors de l'écartement de la zone centrale (7") par rapport au fond de dosette (3).

15. Utilisation d'une dosette sous forme de capsule (1) selon l'une quelconque des revendications 1 à 12 pour préparer une boisson, de préférence pour préparer une boisson à base de café, cacao, thé et/ou lait.
